# EUROPEAN PATENT APPLICATION

(11) **EP 2 550 862 A1**
(43) Date of publication of application: **30.01.2013**
(21) Application number: 11396005.8
(22) Date of filing: 25.07.2011
(51) Int. Cl.: A01K 47/06

(54) **Bottom part arrangement in a beehive structure meant for bees**

(71) Applicant: Nuutero, Juha, 37370 Narva (FI)
(72) Inventor: Nuutero, Juha, 37370 Narva (FI)
(74) Representative: Nieminen, Taisto Tapani

(57) **Abstract**

Bottom part arrangement (8); (1) in the beehive structure meant for bees in which beehive structure the body piece (8) of the bottom part is a frame with a gap at the bottom inside which a separate bottom plate (1) can be adjusted while resting on the mentioned frame which bottom plate can be pushed into the body piece (8) in the direction of the planar part (4) of the bottom plate (1) to the first, horizontal position and to the second, horizontal position in which case it is turned upside down in relation to the first position. There is a retracted form (5) at the edge part of the planar part (4) of the bottom plate (1) for forming an air channel between the edge of the plate (1) and the frame part of the body piece (8).

## Description

The invention relates to a bottom part arrangement in a beehive structure meant for bees in which beehive structure the body piece of the bottom part is a frame with a gap in the bottom inside which frame a separate bottom plate can be adjusted while resting on the mentioned frame.

Previously a frame is known as a bottom part in the beehive structure of the bees which frame comprises a flight gap of the bees located at one side and comprises a bottom plate or a net inside the frame. Several honeycomb cassettes are located on top of each other on top of the bottom part each comprising the honeycombs. When one wants to have an access to the bottom part, all the above mentioned cassettes and also the possible cover and protective structures and weights must be lifted away from the top of the bottom part. The flight gap directs the bees usually on top of the bottom plate and from there they continue to fly to the honeycombs.

When the bottom plate is fixed in the known structures, a compromise has been made when defining its altitude in such a way that there is too little room above of the bottom plate for the needs in the winter and correspondingly too much room for the needs in the summer. Alternatively an arrangement has been used in which a podium framework is added between the bottom and the honeycomb cassettes. This adding requires the removal of the whole cassette pile from the top of the bottom.

The disadvantage of the known structures in the summer is the fact that wild vegetation becomes created on top of the bottom plate when there is too much room. In the winter there is for its part too little room and dead bees block the ventilation, become wet, freeze and rot when they drop on top of the bottom plate. The decreasing of the ventilation causes mould to the edges and corners of the bottom plate. In the known solutions one has tried to solve the problem by placing a ventilation net at the bottom and by increasing the room. This however has caused excessive coldness and in the summer wild vegetation to the beehive when the room has been increased.

In the present invention the problems related to the bottom part and the bottom plate have astonishingly been solved and one has achieved a structure in which the above mentioned disadvantages have been eliminated. It is characteristic of the bottom part arrangement according to the invention that the bottom plate can be located to the body piece to the first, horizontal position and to the second, horizontal position in which case it is turned upside down in relation to the first position.

The advantage of the bottom part arrangement according to the invention is the fact that the bottom plate belonging to it can be easily pulled out from the bottom part from behind the beehive structure and can be turned and pushed back in which case it is placed to a different position regarding its height at the frame of the bottom part. The flight gap of the bees stays unchangeable and when they come in through the flight gap, they become directed on top of the bottom plate in each case. Due to the structure of the bottom plate ventilation occurring from the edges can be gained to the beehive which ventilation is neither too strong nor the incoming cold air hits directly the bees. In addition to that the ventilation originating from the edges prevents the mould from forming to the edge parts and corners.

In the following the invention is described more detailed by referring to the accompanying drawings in which
Figures 1 a-d show a bottom plate which can be located to the bottom part seen from various sides.
Figure 2 shows the body piece of the bottom part and the bottom plate seen as a side view.
Figure 3 shows the body piece of the bottom part and the bottom plate when the bottom plate is being turned.
Figure 4 shows the bottom plate at the body piece of the bottom part diagonally seen.
Figure 5 shows the bottom plate when it is being turned at the body piece diagonally seen.

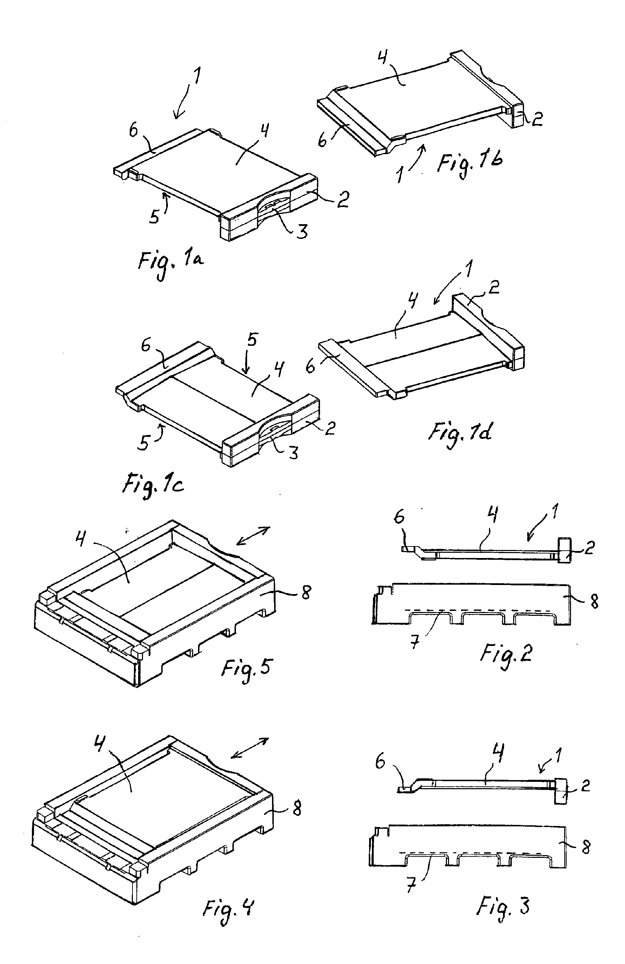

In the figure 1 a bottom plate 1 which can be located to the body piece 8 of the bottom part is shown which bottom plate comprises a planar part 4, a front edge 6 and a trail edge 2. The trail edge 2 also comprises a grip 3 which can be pulled and the removal of the bottom plate 1 is easy to perform. The planar part 4 is at a different level in relation to the front edge 6 and the trail edge 2 so that when the bottom plate becomes turned upside down, the planar part 4 is placed at a different height at the body piece 8 of the bottom part. At the two edges which are opposite in relation to each other of the planar part 4 the edge part is pulled inside in which case free holes 5 are formed to the sides of the bottom plate 1 in such a way that the air can circulate from the holes 5 from between the body piece 8 and the planar part 4.

In the figure 2 there is the body piece 8 of the bottom part and the bottom plate 1 which is turned in such a way that its planar part 4 comes to a lower position if it is placed to the body piece 8. There is a net 7 as the lowermost piece at the body piece 8 which net prevents for example the mice from accessing the beehive on top of the plate 1 and inside the beehive but allows the needed ventilation to come to the beehive.

In the figure 3 there is the body piece 8 of the bottom part and the bottom plate 1 which is turned so that that its planar part 4 reaches an upper position if it is placed to the body piece 8. The flight gap of the bees is at the left end of the body piece 8.

In the figure 4 the bottom plate 1 is in such a position that the planar part 4 is at an upper position and in the figure 5 the planar part is at a lower position. With the help of an arrow removal and assembly directions of the bottom plate 1 are shown. At the body piece 8 there is a gap of the exactly same size for the piece 2 of the trail edge of the bottom plate so that the structure is fixed for that part and no ventilation or no passage of the bees occurs through this background part. The flight gap at the opposite edge of the body piece 8 is always open and it is a small hole so that mice cannot access the beehive through it. The bottom plate is easy to manufacture to a needed form by casting it for example from polystyrene resin.

The planar part 4 of the bottom plate 1 and especially the upper surface are shown as a direct plane in the summer position (figures 3 and 4) and in the winter position in which case it is upside down this surface is shown when it tilts towards the edges (figures 2 and 5). The tilted surface stiffens the bottom plate 1 and directs condensation water away to the edges and out through the net 7 in the winter position.

## Claims

1. Bottom part arrangement (8); (1) in the beehive structure meant for bees in which beehive structure the body piece (8) of the bottom part is a frame with a gap at the bottom inside which a separate bottom plate (1) can be adjusted while resting on the mentioned frame which bottom plate can be pushed into the body piece (8) in the direction of the planar part (4) of the bottom plate (1) to the first, horizontal position and to the second, horizontal position in which case it is turned upside down in relation to the first position, **characterized in that** there is a retracted form (5) at the edge part of the planar part (4) of the bottom plate (1) for forming an air channel between the edge of the plate (1) and the frame part of the body piece (8).

2. Bottom part arrangement (8); (1) according to the claim 1, **characterized in that** the planar part (4) of the bottom plate (1) is in the first position at a higher level than in the second position turned upside down.

3. Bottom part arrangement (8); (1) according to the claim 1, **characterized in that** the bottom plate (1) can be pushed into the body piece (8) and can be pulled out from the rear side of the beehive structure from the opposite side in relation to the flight gap.

4. Bottom part arrangement (8), (1) according to the claim 1, **characterized in that** by placing the bottom plate (1) into a turned position, the distance of the planar part (4) of the bottom plate can be changed in relation to the honeycomb structure located above.
